# EUROPÄISCHE PATENTSCHRIFT

(11) **EP 0 624 746 B1**
(45) Veröffentlichungstag und Bekanntmachung des Hinweises auf die Patenterteilung: **16.07.1997**
(21) Anmeldenummer: 94107132.6
(22) Anmeldetag: 06.05.1994
(51) Int. Cl.: F16K 31/122

(54) **Sperrventil**
Shut-off valve
Soupape d'arrêt

(30) Priorität: 11.05.1993 DE 9307166 U
(43) Veröffentlichungstag der Anmeldung: 17.11.1994
(73) Patentinhaber: Bürkert Werke GmbH & Co., D-74653 Ingelfingen (DE)
(72) Erfinder: Arnold, Dieter, D-74670 Forchtenberg (DE); Renninger, Jürgen, D-74626 Bretzfeld (DE); Eurich, Werner, D-74626 Bretzfeld-Unterheimbach (DE)
(74) Vertreter: Degwert, Hartmut, Dipl.-Phys.

(56) Entgegenhaltungen:
- DE-A- 1 809 448
- DE-B- 1 074 940
- US-A- 3 029 061

## Beschreibung

Die Erfindung betrifft ein Sperrventil, das durch eine Kolben/Zylinderanordnung pneumatisch betätigbar ist.

Aus der DE-A-1 809 448, die den nächstkommenden Stand der Technik bildet, ist ein pneumatisch betätigbares Durchgangsventil mit einem Zu- und Ablauf für ein Medium enthaltendes Ventilgehäuse bekannt, dessen Durchgang beim Ventilsitz von einem Verschlußelement gesperrt oder geöffnet wird. Das Verschlußelement wird durch den in dem Zylinder verschiebbar geführten, den Zylinder in eine erste und eine zweite Teilkammer teilenden Kolben über eine Kolbenstange betätigt. Der Kolben selbst weist eine zur ersten Teilkammer offene Höhlung auf, in die ein zylindrischer Ansatz ragt, der eine Dichtung aufnimmt und zugleich das Totvolumen der ersten Kammer reduziert. An der Kolbenrückseite liegt eine Feder an, die den Kolben in die Schließstellung drückt.

Aus der US-A-3 029 061 ist ein hydraulisches Ventil mit einem Kolben bekannt, der eine zu einer ersten Teilkammer hin offene Höhlung aufweist, in die ein Gehäusevorsprung ragt. Auch bei diesem Ventil wird der Kolben durch eine Feder in eine Grundstellung gedrückt, wobei aber kein mit dem Kolben über eine Kolbenstange verbundenes Verschlußelement vorgesehen ist.

Der Erfindung liegt die Aufgabe zugrunde, ein Sperrventil der eingangs angegebenen Art so auszubilden, daß einerseits ein schnelles Schalten des Sperrventils möglich ist, andererseits aber bei Steuerung hoher Drücke übermäßig große Stellkräfte am Kolben in Öffnungsrichtung des Ventils vermieden werden.

Diese Aufgabe wird erfindungsgemäß durch die Merkmale des Anspruchs 1 gelöst.

Zweckmäßige Weiterbildungen der Erfindung sind in den abhängigen Ansprüchen beschrieben.

Das Volumenverdrängungselement reduziert bei geschlossenem Sperrventil das Totvolumen in der ersten Kammer erheblich. Da das Verschlußelement des erfindungsgemäßen Ventils in seiner Schließstellung durch das Medium gegen den Ventilsitz belastet wird, wirkt über die Kolbenstange eine Kraft auf den Kolben in Richtung des Ventilsitzes. Zum Öffnen des Ventils ist die gesamte auf den Kolben wirkende Kraft durch den Aufbau eines Steuerdrucks in der ersten Kammer zu kompensieren. Nach dem Abheben des Verschlußelements von dem Dichtsitz entsteht am Kolben ein Kräfteüberschuß, da die durch den Druck des Mediums erzeugte, entgegengesetzte Kraftkomponente entfällt. Dies führt üblicherweise bei sehr hohem Druck des Mediums zu einer starken Beschleunigung des Kolbens. Durch das geringe Volumen der ersten Teilkammer bei geschlossenem Sperrventil fällt der Steuerdruck in der ersten Teilkammer während der Öffnungsbewegung des Kolbens schnell ab, so daß sich eine Beschädigung des Sperrventils praktisch ausschließen läßt, obwohl in der Anfangsphase des Schaltvorgangs des Sperrventils der volle Steuerdruck zur Verfügung steht. Der schnelle Druckabfall nach Ablauf der Anfangsphase bewirkt also keine Erhöhung der erforderlichen Schaltzeit. Die Strömungsverhältnisse in der ersten Teilkammer werden durch am Verdrängungselement vorgesehene, radial verlaufende Rippen günstig beeinflußt. Damit die Rippen jedoch das Totvolumen in der ersten Kammer nicht erhöhen, entspricht die Kontur jeder Rippe im wesentlichen der Kontur des angrenzenden Wandungsbereichs der Höhlung.

Bei einer bevorzugten Ausführungsform werden diejenigen Bereiche des Volumenverdrängungselements, die auf der den Kolben abgewandten Seite liegen, entsprechend, d.h. komplementär der Wandung der ersten Teilkammer ausgebildet.

Eine zusätzliche Verstärkung des erfindungsgemäßen Effekts läßt sich durch ein Drosselelement erzielen, das zwischen der ersten Teilkammer und einem Einlaß am Zylinder angeordnet ist und für das Einleiten eines Steuermediums in die erste Teilkammer vorgesehen ist. Hierdurch wird vermieden, daß nach der Anfangsphase eines Schaltvorgangs durch ein unkontrolliert nachströmendes Steuermedium der schnelle Druckabbau in der ersten Teilkammer ausgeglichen wird.

Weitere Merkmale und Vorteile der Erfindung ergeben sich aus der folgenden Beschreibung einer Ausführungsform der Erfindung unter Bezugnahme auf die Zeichnungen. Es zeigen:
Fig. 1 eine Querschnittsansicht einer Ausführungsform der Erfindung; und
Fig. 2 eine Draufsicht auf ein Volumenverdrängungselement der Ausführungsform von Fig. 1.

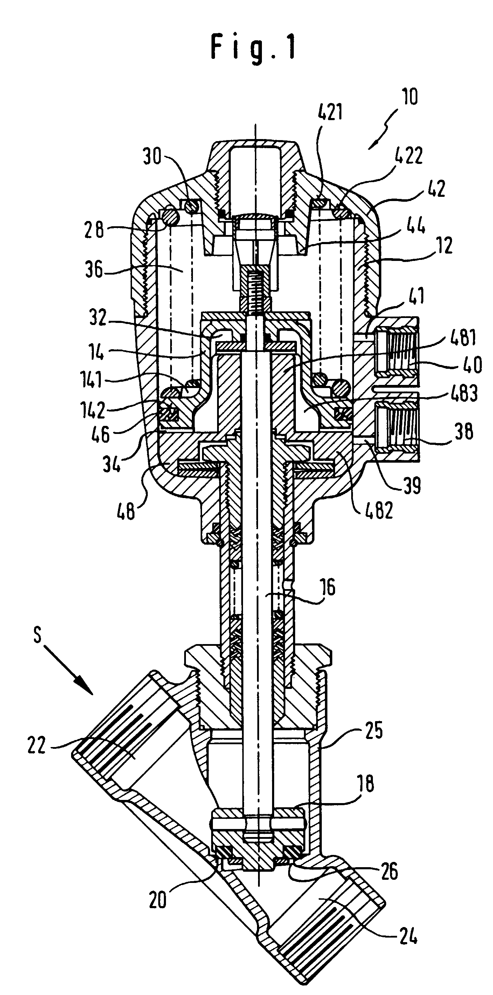

In Fig. 1 ist ein erfindungsgemäß ausgebildetes Sperrventil 10 im geschlossenen Zustand im Querschnitt dargestellt. Das Sperrventil 10 besteht im wesentlichen aus einem Zylinder 12, einem Kolben 14, einer Kolbenstange 16, einem Verschlußelement 18 und einem Ventilsitz 20. Das Verschlußelement 18 blockiert ein Medium in Fließrichtung S, das durch einen Eingangskanal 22 in das Sperrventil 10 gelangt und bei geöffnetem Sperrventil 10 über einen Ausgangskanal 24 wieder herausströmt. Der Eingangskanal 22 und der Ausgangskanal 24 werden durch ein Ventilgehäuse 25 begrenzt, das mit dem Zylinder 12 verbunden ist.

Das Verschlußelement 18 liegt auf dem Ventilsitz 20 auf und verschließt einen Durchgang 26, der von dem Ventilsitz 20 umgeben wird. Das Verschlußelement 18 ist über die Kolbenstange 16 mit dem Kolben 14 fest verbunden. Auf den Kolben 14 drücken vorgespannte Federn 28 und 30 in Richtung auf die Schließstellung des Verschlußelements 18. Somit wird das Verschlußelement 18 über den Kolben 14 und die Kolbenstange 16 durch die Federn 28 und 30 sowie durch den anliegenden Druck des Mediums in Schließstellung des Verschlußelements 18 belastet.

Der Zylinder 12, der Kolben 14, die Kolbenstange 16, das Verschlußelement 18 sowie die Federn 28 und 30 sind koaxial angeordnet.

Der Kolben 14 ist glockenförmig ausgebildet, so daß sich eine Höhlung 32 innerhalb des Kolbens 14 ergibt. Der Kolben 14 teilt den Zylinder 12 in eine erste Teilkammer 34 und eine zweite Teilkammer 36. Die Höhlung 32 ist in Richtung auf die erste Teilkammer 34 geöffnet. Die erste Teilkammer 34 weist im geschlossenen Zustand des Sperrventils 10 ein kleines Totvolumen auf, während die zweite Teilkammer 36 ein vergrößertes Volumen aufweist.

Um den Kolben 14 für eine Öffnungs- und Schließbewegung des Verschlußelements 18 steuern zu können, sind ein erster Anschluß schluß 38 für die erste Teilkammer 34 und ein zweiter 40 für die zweite Teilkammer 36 vorgesehen. Durch entsprechende Einstellung eines Gasdrucks in der ersten Teilkammer 34 bzw. der zweiten Teilkammer 36 wird der Kolben 14 zum Öffnen bzw. Schließen des Sperrventils 10 bewegt. Das Gas wird durch bekannte Vorrichtungen zum Steuern des Kolbens 14 in die bzw. aus der ersten und zweiten Teilkammer 34, 36 hinein bzw. heraus bewegt. Eine ausführliche Beschreibung dieser bekannten Vorrichtungen erübrigt sich. Zwischen dem Anschluß 38, 40 und der entsprechenden Teilkammer 34, 36 ist jeweils eine Drossel 39, 41 in der Art einer dünnen Bohrung vorgesehen, die ein zu schnelles Einströmen strömen in die Teilkammer 34, 36 bzw. ein zu schnelles aus der Teilkammer 34, 36 verhindert. Die Drossel 39, 41 ist dabei auf den erfindungsgemäßen Volumenreduzierungseffekt in der ersten Teilkammer 34 beim Öffnen des Sperrventils 10 abgestimmt.

Auf den Zylinder 12 ist eine Verschlußkappe 42 aufgeschraubt, die einen sich in Richtung auf den Kolben 14 erstreckenden ringförmigen Ansatz aufweist, der als Anschlag 44 für den Kolben 14 dient. Weiterhin weist die Verschlußkappe 42 Nuten 421, 422 auf, in die die den Kolben 14 in Schließstellung des Verschlußelements 18 belastenden Federn 28 und 30 eingreifen. Dadurch sind die Federn 28, 30 im Kolben 14 gegen eine Radialbewegung relativ zur Verschlußkappe 42 gesichert.

Die anderen Enden der Federn 28 und 30 liegen auf der zum Anschlag 44 gerichteten Fläche des Kolbens 14 auf. Dabei drückt die radial innere Feder 30 gegen einen gegenüber dem Ende der Feder 28 erhöhten Absatz 141.

Um eine exakte, verlustfreie Steuerung des Kolbens 14 zu ermöglichen, ist in einer radial nach außen offenen Ringnut 142 im Kolben 14 eine Dichtung 46 vorgesehen.

In die erste Teilkammer 34 ist ein Volumenverdrängungselement 48 eingebracht. Das Volumenverdrängungselement 48 ist koaxial zur Kolbenstange 16 gelagert, wobei die Kolbenstange 16 relativ zu dem Volumenverdrängungselement 48 axial verschiebbar ist. Das Volumenverdrängungselement 48 weist einen hülsenförmigen Teil 481 und einen scheibenförmigen Teil 482 auf. Der hülsenförmige Teil 481 ragt in die Höhlung 32 des Kolbens 14 hinein. Der scheibenförmige Teil 482 schließt sich an den hülsenförmigen Teil 481 an und erstreckt sich bis zur Wandung des Zylinders 12, die die erste Teilkammer 34 radial begrenzt. Der scheibenförmige Teil 482 ist der Kontur der Zylinderwandung und der Oberflächenkontur der Innenstirnfläche der ersten Teilkammer 34 angepaßt ausgebildet.

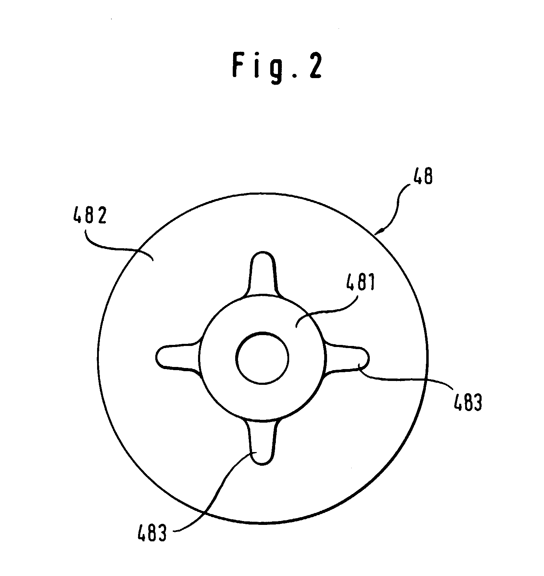

Wie den Figuren 1 und 2 zu entnehmen ist, stehen von dem hülsenförmigen Teil 481 des Volumenverdrängungselements 48 um 90° versetzte Rippen 483 ab. Diese Rippen 483 sind in ihrer Kontur den angrenzenden Bereichen der Höhlung 32 des Kolbens 14 angepaßt ausgebildet. Durch das Volumenverdrängungselement 48 wird das Totvolumen, also das für den Steuerdruck bei geschlossenem Sperrventil 10 in der ersten Teilkammer 34 zur Verfügung stehende Volumen, stark verkleinert.

Zum Öffnen des Sperrventils 10 wird in der ersten Teilkammer 34, also in dem Totvolumen, ein Steuerdruck aufgebaut, indem durch den Anschluß 38 z.B. Druckluft der ersten Teilkammer 34 zugeführt wird. Ist die durch den Steuerdruck in der ersten Teilkammer 34 erzeugte Stellkraft größer als die Summe der Kräfte, die durch die Federn 28, 30 auf den Kolben 14 und durch den Mediumdruck auf das Verschlußelement 18 einwirken, so bewegt sich der Kolben 14 und somit die Kolbenstange 16 mit dem Verschlußelement 18 nach oben. Durch das Abheben des Verschlußelements 18 von dem Ventilsitz 20 entfällt plötzlich die zuvor durch den Druck des Mediums erzeugte Kraftkomponente in Schließrichtung. Durch die Bewegung des Kolbens 14 nach oben vergrößert sich aber das Volumen in der ersten Teilkammer 34 im Verhältnis zum Ausgangsvolumen stark, so daß der Steuerdruck, der für die Anfangsbewegung des Kolbens 14 nötig war, entsprechend schnell reduziert wird. Da nun die Stellkraft in Öffnungsrichtung stark vermindert ist, wird eine zu hohe, plötzliche Beschleunigung des Kolbens 14 vermieden.

## Patentansprüche

1. Sperrventil (10), das durch eine Kolben/Zylinderanordnung (12, 14) pneumatisch betätigbar ist, mit einem einen Zu- und Ablaufkanal (22, 24) für ein Medium enthaltenden Ventilgehäuse (25), dessen Durchgang (26) beim Ventilsitz (20) von einem Verschlußelement (18) gesperrt oder geöffnet wird, das durch den in dem Zylinder (12) verschiebbar geführten, den Zylinder (12) in eine erste (34) und eine zweite Teilkammer (36) teilenden Kolben (14) über eine Kolbenstange (16) betätigt und in seiner Schließstellung durch das Medium gegen den Ventilsitz (20) belastet wird, wobei der Kolben (14) eine zur ersten Teilkammer (34) offene Höhlung (32) aufweist, in die ein Volumenverdrängungselement (48) in der ersten Teilkammer (34), die zum Öffnen des Verschlußelements (18) einen gegenüber der zweiten Teilkammer (36) höheren Druck aufweist, hineinragt und bei geschlossenem Sperrventil (10) das Totvolumen der ersten Teilkammer (34) zumindest erheblich verkleinert, wobei das Volumenverdrängungselement (48) radial verlaufende Rippen (483) aufweist, deren Kontur im wesentlichen der Kontur des angrenzenden Wandungsbereichs der Höhlung (32) entspricht, und wobei das Verschlußelement (18) durch Steuerung des Drucks zumindest in der ersten Teilkammer (34) bewegt wird.

2. Sperrventil nach Anspruch 1, wobei das Volumenverdrängungselement (48) koaxial zur Kolbenstange (16) angeordnet ist.

3. Sperrventil nach einem der vorangehenden Ansprüche, wobei die Bereiche des Volumenverdrängungselements (48), die an die die erste Teilkammer (34) begrenzende Wandung angrenzen, auf ihrer dem Kolben (14) abgewandten Seite eine Kontur haben, die komplementär zu der Kontur dieser Wandung ausgebildet ist.

4. Sperrventil nach einem der vorangehenden Ansprüche, wobei das Volumenverdrängungselement (48) gegen eine Bewegung relativ zum Zylinder (12) in der ersten Teilkammer (34) fixiert ist.

5. Sperrventil mit einem Anschluß (38, 40) für ein pneumatisches Steuermedium für die erste und/oder zweite Teilkammer (34, 36) nach einem der vorangehenden Ansprüche, wobei zwischen der ersten Teilkammer (34) und dem Anschluß (38) eine Drossel (39) und/oder zwischen der zweiten Teilkammer (36) und dem Anschluß (40) eine Drossel (41) vorgesehen ist.

## Revendications

1. Soupape d'arrêt (10) qui peut être actionnée pneumatiquement par un groupement piston/ cylindre (12, 14), comportant une cage de soupape (25) comprenant un canal d'arrivée et un canal de sortie (22, 24) pour un fluide et dont le passage (26) près du siège de soupape (20) est fermé ou ouvert par un élément de fermeture (18) qui est actionné par l'intermédiaire d'une tige de piston (16) par le piston (14) mobile dans le cylindre (12) et divisant le cylindre (12) en une première chambre partielle (34) et en une seconde chambre partielle (36), et qui dans sa position fermée, est sollicité par le fluide contre le siège de soupape (20), le piston (14) présentant un creux (32) ouvert vers la première chambre partielle (34) et dans lequel un élément de déplacement du volume (48) dépasse à l'intérieur de la première chambre partielle (34) qui pour l'ouverture de l'élément de fermeture (18), présente une pression supérieure à celle de la seconde chambre partielle (36) et en cas de soupape d'arrêt (10) fermée, réduit au moins considérablement le volume mort de la première chambre partielle (34), l'élément de déplacement du volume (48) présentant des nervures (483) radiales dont le contour correspond sensiblement au contour de la zone adjacente de la paroi du creux (32) et l'élément de fermeture (18) étant déplacé par la commande de la pression au moins dans la première chambre partielle (34).

2. Soupape d'arrêt selon la revendication 1 dans laquelle l'élément de déplacement du volume (48) est disposé coaxialement par rapport à la tige de piston (16).

3. Soupape d'arrêt selon l'une quelconque des revendications précédentes, dans laquelle les zones de l'élément de déplacement du volume (48) qui sont adjacentes à la paroi délimitant la première chambre partielle (34), ont sur leur côté opposé au piston (14), un contour qui est conçu comme étant complémentaire au contour de cette paroi.

4. Soupape d'arrêt selon l'une quelconque des revendications précédentes, dans laquelle l'élément de déplacement du volume (48) est fixé dans la première chambre partielle (34) selon un mouvement allant dans un sens opposé par rapport au cylindre (12).

5. Soupape d'arrêt comportant un raccord (38, 40) pour un fluide à commande pneumatique pour la première et/ou la seconde chambre partielle (34, 36), selon l'une quelconque des revendications précédentes, dans laquelle il est prévu un papillon (39) entre la première chambre partielle (34) et le raccord (38) et/ou un papillon (41) entre la seconde chambre partielle (36) et le raccord (40).

## Claims

1. A shut-off valve (10), which can be pneumatically operated by a piston/cylinder arrangement (12, 14), having an inlet and outlet duct (22, 24) for a valve housing (25) containing medium, the passage (26) of which at the valve seat (20) is closed or opened by a sealing element (18), which is operated by the piston (14), which is displaceably guided in the cylinder (12) and divides the cylinder (12) into a first (34) and a second sub-chamber (36), via a piston rod (16) and in its closed position is loaded by the medium against the valve seat (20), wherein the piston (14) has a cavity (32) open to the first sub-chamber (34), into which a volume displacement element (48) in the first sub-chamber (34) extends, which to open the sealing element (18) has a higher pressure in comparison with the second sub-chamber (36), and with the shut-off valve (10) closed at least considerably reduces the clearance volume of the first sub-chamber (34), wherein the volume displacement element (48) has radially extending ribs (483), the contour of which substantially corresponds to the contour of the adjacent wall region of the cavity (32), and wherein the sealing element (18) is moved by controlling the pressure at least in the first sub-chamber (34).

2. A shut-off valve according to Claim 1, wherein the volume displacement element (48) is disposed coaxially to the piston rod (16).

3. A shut-off valve according to one of the preceding Claims, wherein the regions of the volume displacement element (48) which abut the wall limiting the first sub-chamber (34) have, on their side faced away from the piston (14), a contour which has a complementary construction to the contour of this wall.

4. A shut-off valve according to one of the preceding Claims, wherein the volume displacement element (48) is prevented from making a movement relative to the cylinder (12) in the first sub-chamber (34).

5. A shut-off valve having a connection (38, 40) for a pneumatic control medium for the first and/or second sub-chamber (34, 36) according to one of the preceding claims, wherein a choke (39) is provided between the first sub-chamber (34) and the connection (38) and/or a choke (41) is provided between the second sub-chamber (36) and the connection (40).
